# EUROPEAN PATENT APPLICATION

(11) **EP 4 589 404 A1**
(43) Date of publication of application: **23.07.2025**
(21) Application number: 25151697.7
(22) Date of filing: 14.01.2025
(51) Int. Cl.: G06F 1/16, G06F 1/18, G06Q 20/20, H05K 5/00, H05K 5/02, H05K 5/03, G07G 1/00

(54) **RELAY DEVICE AND POS SYSTEM**

(30) Priority: 16.01.2024 JP 2024004592; 07.03.2024 JP 2024034662; 07.03.2024 JP 2024034828
(71) Applicant: Seiko Epson Corporation, Tokyo 160-8801 (JP)
(72) Inventor: MURATA, Shoichi, Suwa-shi, 392-8502 (JP); MAEKAWA, Hironori, Suwa-shi, 392-8502 (JP)
(74) Representative: Lewis Silkin LLP

(57) **Abstract**

The relay device 1 includes a plurality of types of connectors to which external electronic devices are connected; a control section that controls communication between the electronic devices; a power supply section that supplies power input from outside to the control section and to an electronic device that is connected to a connector via at least one of the connectors; a main substrate 2 on which the control section and at least one of the connectors are provided; and a communication substrate 13 that is connected to the main substrate 2 and that has a communication section that performs wireless communication; wherein the connector is arranged at one end section of the main substrate 2 and the communication substrate 13 is arranged on the other end section, which is an opposite side from the one end section in a first direction on a flat surface of the main substrate 2.

## Description

The present application is based on, and claims priority from JP Application Serial Number 2024-004592, filed January 16, 2024, 2024-034662, filed March 7, 2024, and 2024-034828, filed March 7, 2024, the disclosure of which are hereby incorporated by reference herein in its entirety.

### BACKGROUND

### 1. Technical Field

The present disclosure relates to a relay device and a POS system.

### 2. Related Art

JP-A-2006-285805 discloses a technique for connecting a cash drawer, a bar code scanner, and a display to a card process terminal equipped with a printing device via a USB hub. JP-A-2006-285805 only supports USB connections using a USB hub.

In addition to devices that use USB connectors, such as in JP-A-2006-285805, there is a case where devices that use other standards or types of connectors, such as serial, are connected to a POS system. In this case, there is concern that such devices cannot be connected to the system described in JP -A-2006-285805.

### SUMMARY

In order to overcome the above problem, one aspect of a relay device includes a plurality of types of connectors to which external electronic devices are connected; a control section that controls communication between the electronic devices; a power supply section that supplies power input from outside to the control section and to an electronic device that is connected to a connector via at least one of the connectors; a main substrate on which the control section and at least one of the connectors are provided; and a communication substrate that is connected to the main substrate and that has a communication section that performs wireless communication, wherein the connector is arranged at one end section of the main substrate and the communication substrate is arranged at an other end section side, which is a side opposite from the one end section in a first direction over a flat surface of the main substrate.

In order to overcome the above problem, one aspect of a POS system includes the above relay device, a POS terminal, and a POS peripheral device.

### BRIEF DESCRIPTION OF THE DRAWINGS

FIG. 1 is a block diagram showing a POS system according to an embodiment of the present disclosure.
FIG. 2 is a perspective view of a relay device as viewed from a front surface.
FIG. 3 is a perspective view of the relay device as viewed from a rear surface.
FIG. 4 is another perspective view of the relay device as viewed from the front surface.
FIG. 5 is a side view of the relay device.
FIG. 6 is another side view of the relay device.
FIG. 7 is a perspective view of the substrate accommodation body as viewed from a right direction.
FIG. 8 is a perspective view of the substrate accommodation body as viewed from a left direction.
FIG. 9 is another perspective view of the relay device as viewed from the front surface.
FIG. 10 is a perspective view of the relay device as viewed from a lower surface.
FIG. 11 is a bottom view of the relay device.
FIG. 12 is a block diagram showing another POS system according to an embodiment of the present disclosure.
FIG. 13 is a perspective view of another relay device as viewed from the front surface.
FIG. 14 is a perspective view of the another relay device as viewed from below the rear surface.
FIG. 15 is a plan view of the another relay device from which a cover body is removed.
FIG. 16 is a perspective view of various connectors provided in the another relay device, as viewed from the rear surface.
FIG. 17 is another perspective view of various connectors provided in the another relay device, as viewed from the rear surface.
FIG. 18 is a perspective view of a relay device according to a modification of the present disclosure, as viewed from the rear surface.

### DESCRIPTION OF EMBODIMENTS

Hereinafter, embodiments of the present disclosure will be described with reference to the drawings. Note that, in the description, directions such as front, rear, left, right, upward, and downward are the same as those for a relay device 1 or a relay device 200 unless otherwise specified. Reference numeral FR shown in each drawing indicates a front direction of the relay device 1 or the relay device 200 when it is installed on the installation surface and is used, reference numeral UP indicates an upper direction of the relay device 1 or the relay device 200, and reference numeral LH indicates a left direction of the relay device 1 or the relay device 200. In each drawing, an up-down direction corresponds to the vertical direction, and a front-rear direction and a left-right direction correspond to the horizontal direction. The front-rear direction corresponds to a "first direction" of the present disclosure, the vertical direction corresponds to a "second direction" of the present disclosure, and the left-right direction corresponds to a "third direction" of the present disclosure.

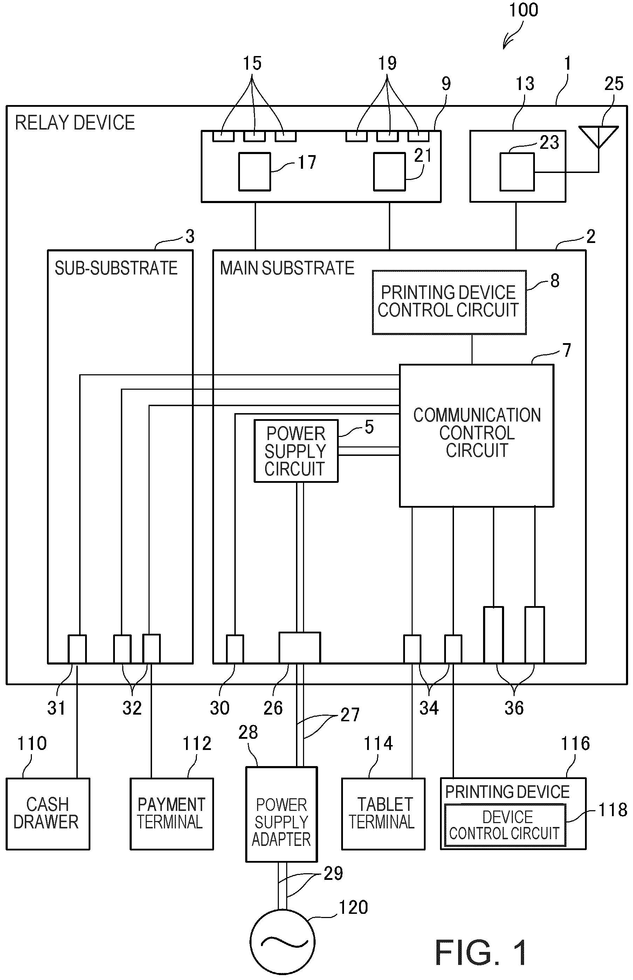

FIG. 1 is a block diagram showing a POS system 100 according to the present embodiment. The POS system 100 equipped with a relay device 1. The relay device 1 is equipped with a main substrate 2. On the main substrate 2, a power supply circuit 5, a communication control circuit 7, and a printing device control circuit 8 are mounted. The main substrate 2 is electrically connected to a sub-substrate 3, a display substrate 9, and a communication substrate 13.

On the display substrate 9, switches 15, a switch control circuit 17, a plurality of LEDs 19, and an LED control circuit 21 are mounted. Note that the switches 15 and switch control circuit 17, and the plurality of LEDs 19 and LED control circuit 21 may be mounted on different substrates. On the communication substrate 13, a communication circuit 23 is mounted, and an antenna 25 is connected to the communication circuit 23. The communication substrate 13 performs wireless communication between the relay device 1 and a predetermined device. The communication circuit 23 and the antenna 25 correspond to the "communication section" of the present disclosure.

A power supply connector 26 is connected to the power supply circuit 5. A power supply adapter 28 is connected to the power supply connector 26 via a power supply adapter cable 27. The power supply adapter 28 is a power supply device that converts AC power supplied from a commercial power supply 120 into DC power, AC power of a predetermined voltage, or the like. A power supply cable 29 is connected to the power supply adapter 28. The power supply cable 29 is connectable to the commercial power supply 120. In this embodiment, the power supply adapter cable 27 works as a so-called DC cable, and the power supply cable 29 works as a so-called AC cable.

Multiple standards of connectors are connected to the communication control circuit 7. In this embodiment, a LAN connector 30, a modular connector 31, a plurality of serial connectors 32, a plurality of USB type-C connectors 34, and a plurality of USB type-A connectors 36 are connected to the communication control circuit 7. Each of these connectors provided in the relay device 1 works as a plug-in socket for various types of plugs.

The LAN connector 30 is RJ-45 connector. The relay device 1 may be connected to a predetermined communication network via a LAN cable connected to the LAN connector 30. The communication network is a network composed of a public line network, a leased line, other communication lines, and various communication equipment, and it is not limited to a specific form.

A tablet terminal 114 is connected to the USB Type-C connector 34. In the present embodiment, the tablet terminal 114 is a terminal device that includes a processor such as a CPU or an MPU and a storage device such as a RAM or a ROM, and that performs sales management by the CPU or the MPU by operating in accordance with a program stored in the storage device. The tablet terminal 114 can generate image data for printed materials such as receipts.

Note that the tablet terminal 114 may work as a payment terminal. The tablet terminal 114 may also be another terminal device such as a smartphone. The tablet terminal 114 corresponds to a "POS terminal" and an "electronic device" of the present disclosure.

For example, a printing device 116 that prints a receipt and the like is connected to the USB type-C connector 34. The printing device 116 is equipped with a device control circuit 118. The device control circuit 118 has a processor such as a CPU or an MPU, and a storage device such as a RAM or a ROM. The device control circuit 118 causes the CPU or the MPU to operate according to a program stored in the storage device, and generates a command that instructs to transport a print medium, such as a print sheet, by a predetermined amount, or a command that instructs to cut the print medium, for example.

To the USB type-A connectors 36, various devices such as a display device like a monitor, a handheld scanner, and other printing device may be connected.

The modular connector 31 is, for example, a RJ-11 connector to which a cash drawer 110 is connected. The serial connectors 32 are RS-232C connectors to which a payment terminal 112 is connected. The payment terminal 112 is, for example, a card reader or the like. Note that other devices may be connected to the serial connectors 32.

In this way, it is possible to connect devices with different types of connectors to the relay device 1 via various types of connectors. Therefore, in the relay device 1 and the POS system 100, a more organized system can be formed. The cash drawer 110, the payment terminal 112, and the printing device 116 correspond to "electronic devices" and "POS peripheral devices" of the present disclosure.

The LAN connector 30, the modular connector 31, the serial connectors 32, the USB type-C connectors 34, and the USB type-A connectors 36 correspond to the "connectors" of the present disclosure.

Of the connectors described above, the LAN connector 30, the plurality of USB type-C connectors 34, the plurality of USB type-A connectors 36, and the power supply connector 26 are mounted on the main substrate 2. The modular connector 31 and the serial connectors 32 are mounted on the sub-substrate 3. Note that various types of connectors other than described above may be provided in the relay device 1, as long as they are used to form the POS system 100.

Next, a configuration relating to control of the relay device 1 will be described. The communication control circuit 7 has a processor such as a CPU or an MPU, and a storage device such as a RAM or a ROM. The communication control circuit 7 controls an operation of each section of the relay device 1 by causing the CPU and the MPU to operate according to the program stored in the storage device, and controls an operation of predetermined devices connected via various types of connectors and controls sending and receiving of signals. The communication control circuit 7 works as a control section that controls communication between the tablet terminal 114 and the POS peripheral devices, connected to the relay device 1.

A printing device control circuit 8 is connected to the communication control circuit 7. The printing device control circuit 8 controls the printing device 116 connected to the relay device 1 according to the communication control circuit 7. When the printing device 116 performs printing, the tablet terminal 114 generates image data and transmits it to the communication control circuit 7 via the USB type-C connector 34.

If the communication control circuit 7 detects that the printing device 116 is connected to the USB type-C connector 34, the communication control circuit 7 transmits the received image data to the printing device control circuit 8. The printing device control circuit 8 generates a printing control command based on the image data. The printing control command is a command that causes the printing device 116 to perform printing of characters, images, and the like.

The communication control circuit 7 obtains the printing control command and transmits the command, together with the image data, to the printing device 116 as print data via the USB type-C connector 34. If the printing device 116 obtains the print data, the printing device 116 starts printing in accordance with the print data and the command generated by the device control circuit 118. In this way, the printing device 116 can print a receipt or the like by being connected to the relay device 1.

By this, in the POS system 100, the relay device 1 is provided with the printing device control circuit 8 that controls at least a part of the printing device 116, so the structure of the printing device 116 can be simplified. Therefore, the relay device 1 can form the POS system 100 in which a wiring structure is more organized.

Note that in a case where a printing device other than printing device 116 is connected, even when the communication control circuit 7 receives image data generated by the tablet terminal 114, the communication control circuit 7 may transmit the image data to that printing device without generating a printing control command. The communication control circuit 7 corresponds to a "control section" of the present disclosure.

A power supply circuit 5 is connected to the communication control circuit 7. The power supply circuit 5 supplies power that is supplied via the power supply connector 26 to the communication control circuit 7. When a predetermined device is connected to either the USB type-C connector 34 or the USB type-A connector 36, the communication control circuit 7 supplies power, which is supplied from the power supply circuit 5, to the device via that connector.

If the communication control circuit 7 detects that the printing device 116 was connected to the USB type-C connector 34, the communication control circuit 7 transmits a signal that causes the power supply circuit 5 to supply a larger amount of power to the printing device 116 than when other devices are connected. By this, the printing device 116 is supplied with more power via the USB type-C connector 34 to the power supply circuit 5 than when other devices are connected. The printing device 116 is capable of so-called direct driving without storing electricity in an electrical storage section, such as a battery, of the printing device 116.

By this, by being supplied power from the relay device 1, the printing device 116 can be driven without being connected to a power source via a power supply line or the like. Therefore, in the POS system 100, the power supply line extending from the printing device 116 is omitted, and a more organized POS system 100 can be formed. The power supply circuit 5 corresponds to a "power supply section" of the present disclosure.

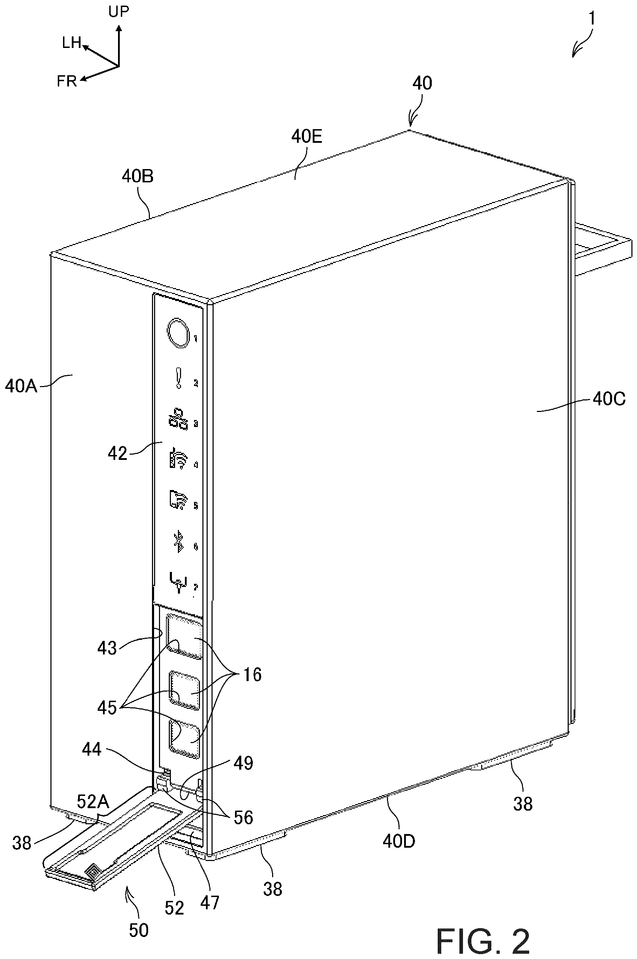

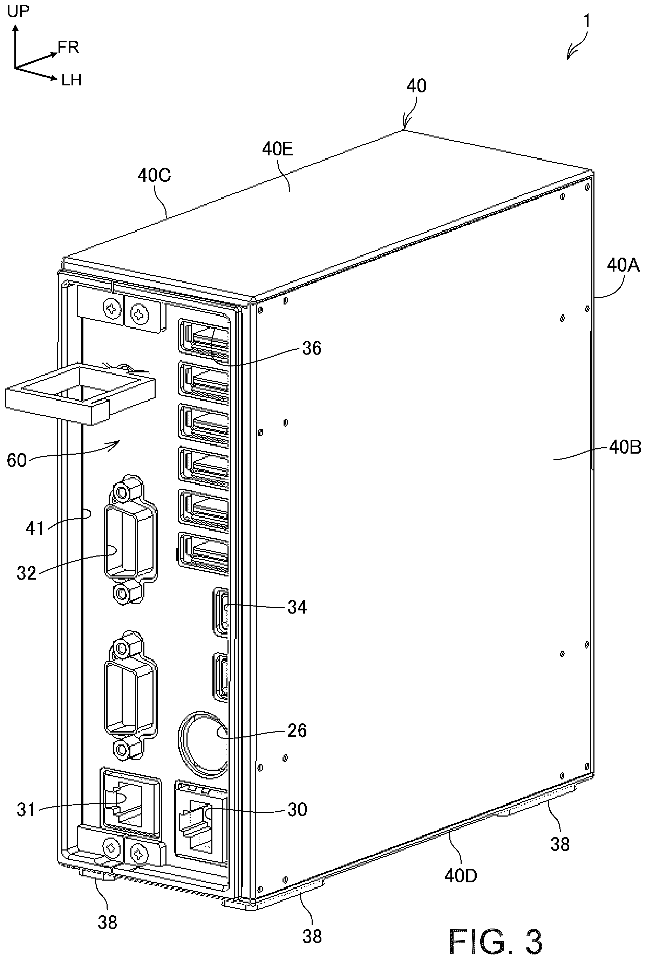

FIG. 2 is a perspective view of the relay device 1 as viewed from the front surface. FIG. 3 is a perspective view of the relay device 1 as viewed from the rear surface. As shown in FIGS. 2 and 3, the relay device 1 is equipped with a case 40 made of resin that has a space S provided therein. When the relay device 1 is installed on the installation surface, the case 40 has a box shape of a rectangular parallelepiped shape whose height dimension is longer than a length dimension in at least the left-right direction. The case 40 of the present embodiment is formed such that the length dimension in the left-right direction is shorter than a length dimension in the front-rear direction. By this, when installed on the installation surface, in plan view, the relay device 1 can suppress expansion of a space that is required for installation.

The case 40 has a front plate 40A that forms a front surface, a pair of side plates 40B and 40C that form a left side surface and a right side surface, a bottom plate 40D that forms a bottom surface, and a top plate 40E that forms a top surface. Each of these surfaces of the case 40 is formed to be a flat surface.

A plurality of leg sections 38 are provided on the bottom surface of the bottom plate 40D. The leg sections 38, which have a rectangular shape in plan view, are arranged at each of the corners of the bottom plate 40D. The bottom plate 40D is spaced away from the installation surface by these leg sections 38. As shown in FIG. 3, a rear surface opening 41, which is an opening for communicating inside and outside of the case 40, is provided over an entire surface of the rear surface of the case 40.

As shown in FIG. 2, the front plate 40A is formed in a rectangular shape in front view, with the long side aligned in the vertical direction. The front plate 40A is provided with a transmission section 42 that transmits light of the LEDs 19. The transmission section 42 is formed using a transparent member or the like in a position that overlaps with the plurality of LEDs 19. In the relay device 1, the display substrate 9 and the transmission section 42 works as a display section. The transmission section 42 is provided on the upper section side of the front plate 40A and at a position close to the right side of the front plate 40A.

The front plate 40A has a recess section 43 that is recessed toward the rear direction, which is located below the transmission section 42. Inside the recess section 43, a plurality of insertion holes 45, which are through holes penetrating in the plate thickness direction of the front plate 40A, are provided. The operation portions 16 of the switches 15 are inserted into each of the insertion holes 45. The operation portions 16 are covered with a cover 50 that is openably and closably attached to the front plate 40A.

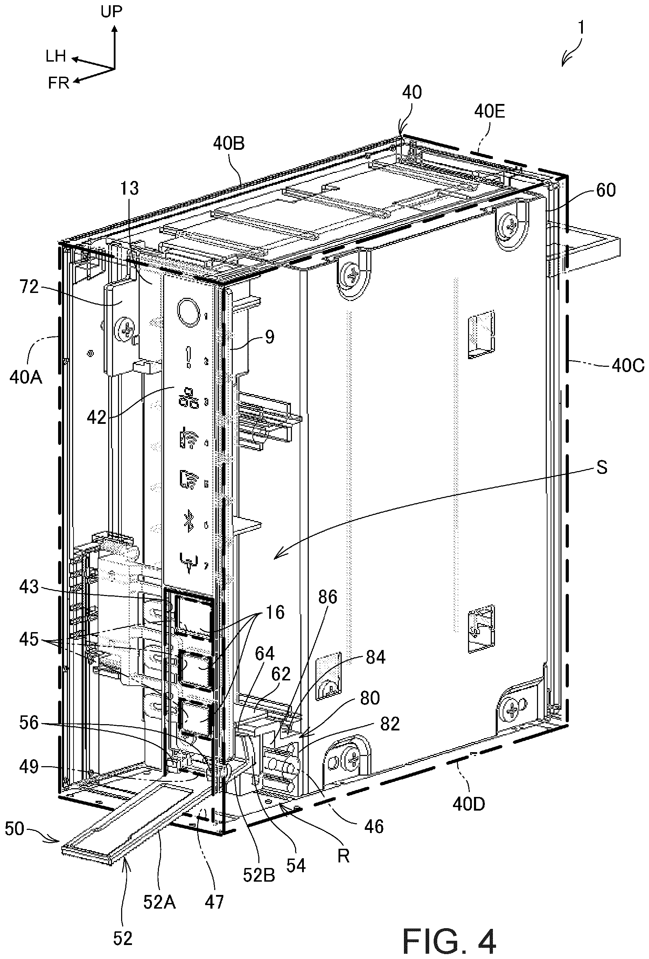

FIG. 4 is a perspective view of the relay device 1 as viewed from the front surface. In FIG. 4, for convenience of explanation, the leg sections 38 are omitted, and the front plate 40A, the side plate 40C, and the top plate 40E are indicated by two-dot chain line. As shown in FIG. 4, inside the recess section 43, an opening section 47, which is a through hole penetrating in the plate thickness direction of the front plate 40A, is provided at a position that is lower than the insertion holes 45. At both ends of an upper edge section 49 of the opening section 47, a pair of attachment sections 44 are provided. The attachment sections 44 are formed in a cylindrical shape extending in the left-right direction.

The cover 50 is attached to the upper edge section 49. The cover 50 has a cover section 52 that is formed in an elongated flat plate shape, and a plate-shaped contact section 54 that rises upright from one end section of the cover section 52 toward the inside of the case 40 at a predetermined angle.

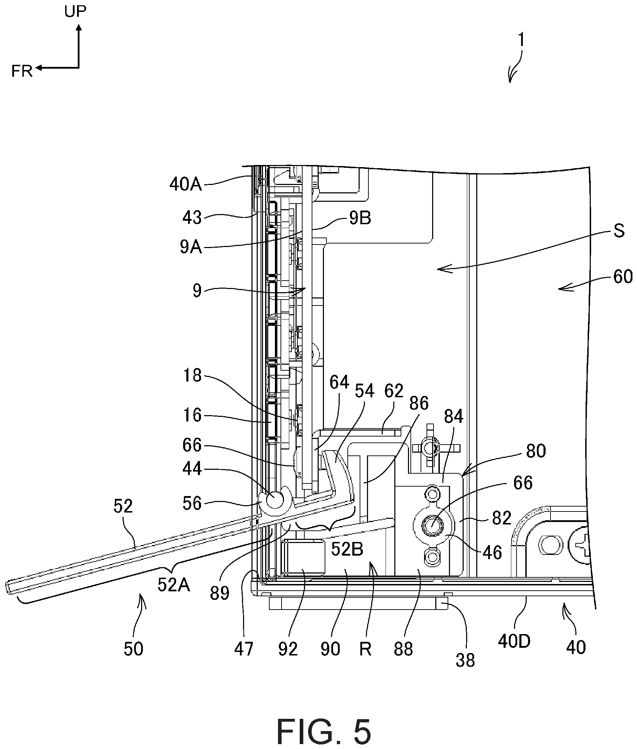

The cover 50 will be described in detail. FIG. 5 is a side view of the relay device 1 as viewed from the right direction. FIG. 5 shows a state in which the cover 50 is separated from the recess section 43, and the side plate 40C is omitted.

As shown in FIG. 5, the cover section 52 is provided with annular engagement sections 56, which are open in part in the circumferential direction, in the intermediate part of the longitudinal direction. The engagement sections 56 are formed at both end sections on a flat surface that faces the recess section 43 of the cover section 52, in the left-right direction. Each engagement section 56 engages, by passing the attachment section 44 through the opened portion, with the attachment section 44 so that the inner circumferential surface of the engagement section 56 is in contact with the peripheral surface of the attachment section 44. By this, the cover 50 is attached to the upper edge section 49 so that it can pivot in a direction that intersects a flat surface of the front plate 40A, using the attachment sections 44 as pivot shafts.

The cover 50 is attached to the front plate 40A so that its longitudinal direction extends along the vertical direction. By this, the cover 50 is provided on the front surface, which is an example of one side surface of the case 40. In the following description, in the longitudinal direction of the cover section 52, a portion located on an upper section side of the engagement section 56 is referred to as a covered section 52A, and a portion located on a lower section side of the engagement section 56 is referred to as a pressing section 52B.

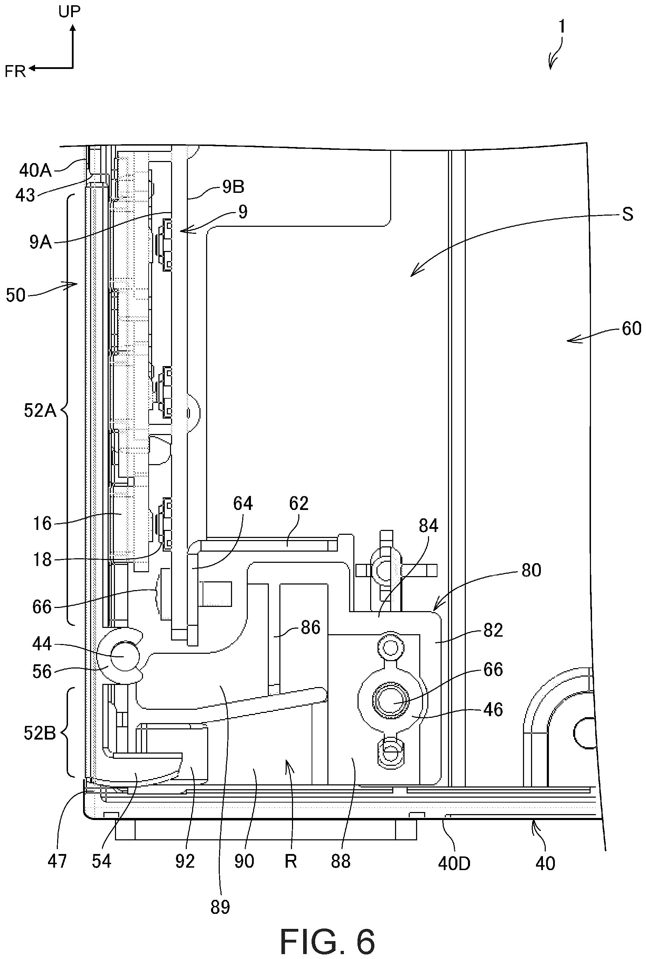

FIG. 6 is a side view of the relay device 1 as viewed from the right direction. In FIG. 6, the cover 50 is in a state that covers the operation portions 16 and the opening section 47, and the side plate 40C is omitted.

The cover section 52 is pivotable from a position where its flat surface is located substantially parallel to the front plate 40A to a position, as viewed from the left-right direction, where that flat surface intersects the front plate 40A. As shown in FIG. 6, when the flat surface of the cover section 52 is located substantially parallel to the front plate 40A, the entire cover section 52 is accommodated inside the recess section 43, and the front surface of the cover section 52 is flush with the front surface of the front plate 40A. In this case, the covered section 52A covers each of the operation portions 16, and the pressing section 52B covers the opening section 47.

By this, in the relay device 1, when the cover 50 covers each of the operation portions 16, the cover 50 can be suppressed from protruding from the front plate 40A or the case 40, and the presence of cover 50 can be reduced. Therefore, the relay device 1 can reduce its installation surface area, and a more compact POS system 100 can be provided. In addition, in a case where it is not necessary to perform a setting operation by operating the operation portions 16, the relay device 1 can suppress the cover 50 from being opened and suppress erroneous operations for the relay device 1. In the following description, when the cover section 52 covers the operation portions 16 and the opening section 47, it is referred to as the cover 50 being in a closed state.

When the user presses the pressing section 52B of the cover 50, the pressing section 52B enters inside of the case 40 through the opening section 47, and the covered section 52A is separated from the recess section 43. As shown in FIG. 5, the cover 50 pivots to a position where the cover section 52 forms a predetermined angle with the front plate 40A as viewed from the left-right direction. By this, the cover 50 pivots from the closed state in a direction intersecting the flat surface of the front plate 40A, and the cover section 52 pivots to a position that forms a predetermined angle with the front plate 40A as viewed from the left-right direction. In the following description, a state in which the covered section 52A is separated from the recess section 43 is referred to as the cover 50 being in an opened state.

The relay device 1 is formed to open and close by pivoting the cover 50 in a direction that intersects the flat surface of the front plate 40A. By this, expansion of the installation space of the relay device 1 in the vertical direction or the left-right direction can be suppressed, compared to if a cover member were provided that can be opened and closed by sliding it in a direction parallel to the flat surface of the front plate 40A.

As shown in FIG. 5, when the cover section 52 pivots to a position that forms a predetermined angle with the front plate 40A, the contact section 54 comes into contact with an attachment piece 64, which is located on the lower direction side, from the rear direction, and pivot of the cover section 52 is stopped. By this, pivoting of the cover 50 is restricted at a position forming a predetermined angle with the front plate 40A.

In this way, in the relay device 1, the attachment piece 64 works as the pivoting stop section of cover 50, so the cover 50 is prevented from pivoting more than necessary. In addition, the attachment piece 64 can suppress that the pressing section 52B and the contact section 54 collide with the display substrate 9 inside the cover 50. In the relay device 1, the attachment piece 64 also serves as the pivoting stop section of the cover 50, so it is possible to reduce the number of components.

As shown in FIG. 4, the case 40 accommodates a substrate accommodation body 60 that accommodates the main substrate 2 and the sub-substrate 3. Similar to the case 40, when the relay device 1 is installed on the installation surface, the substrate accommodation body 60 has a box shape of a rectangular parallelepiped shape whose height dimension is longer than at least a length dimension in the left-right direction.

In the present embodiment, the substrate accommodation body 60 is formed of metal material. By this, noise radiated from the main substrate 2 and the sub-substrate 3 is suppressed from leaking to the outside of the substrate accommodation body 60, and noise from the outside of the substrate accommodation body 60 is suppressed from reaching the main substrate 2 and the sub-substrate 3.

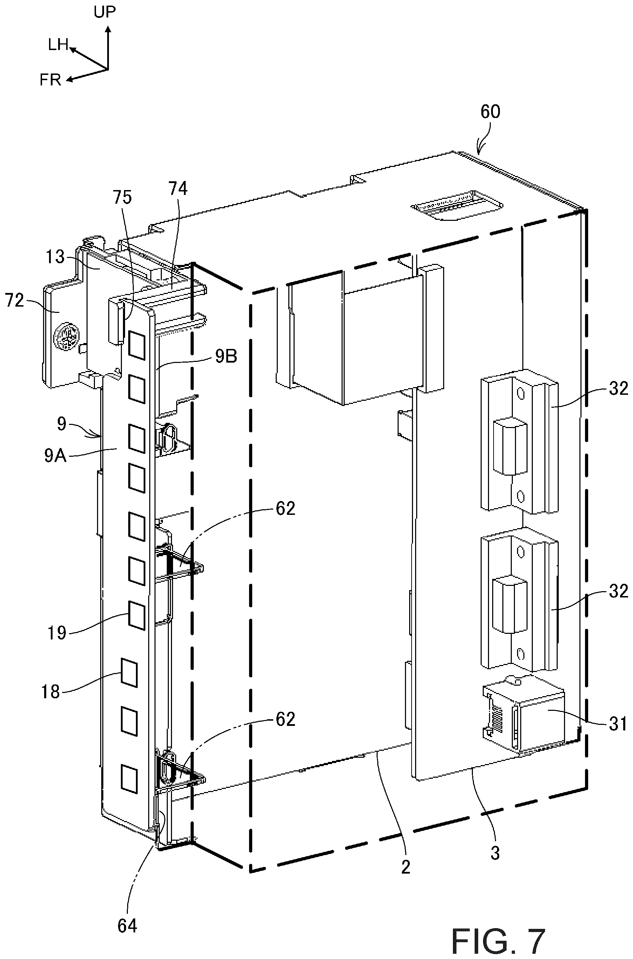

FIG. 7 is a perspective view showing the substrate accommodation body 60 as viewed from the right direction. In FIG. 7, for convenience of explanation, a front surface of the substrate accommodation body 60 and a side surface located on the right direction side are shown by two-dot chain line. As shown in FIG. 7, inside the substrate accommodation body 60, the main substrate 2 and the sub-substrate 3 are arranged such that their flat surfaces are orthogonal with respect to the left-right direction and their flat surfaces are parallel to each other. By this, the relay device 1 can suppress an increase in the length dimension in the vertical direction or the front-rear direction. Various types of connectors mounted on the main substrate 2 and the sub-substrate 3 are mounted so as to be arranged in the vertical direction along a side located at the rear end of each substrate.

As shown in FIG. 3, the rear surface of the substrate accommodation body 60 is exposed to the outside of the case 40 through the rear surface opening 41. In the substrate accommodation body 60, the LAN connector 30, the modular connector 31, the plurality of serial connectors 32, the plurality of USB type-C connectors 34, the plurality of USB type-A connectors 36, and the power supply connector 26 are arranged so that they open toward the rear direction of the case 40.

As shown in FIG. 7, the main substrate 2 and the sub-substrate 3 are arranged side by side in the left-right direction, so the various types of connectors mounted on these substrates are arranged in two rows in the left-right direction. In this embodiment, the plurality of serial connectors 32 and the modular connector 31 are arranged to the right from the other connectors. The various types of connectors in each row are arranged side by side in the vertical direction.

In this way, the relay device 1 can suppress an increase in the length dimension in the vertical direction by mounting the various types of connectors on two separate substrates. Therefore, the relay device 1 can suppress an increase in the size of case 40. In addition, in the relay device 1, the main substrate 2 and sub-substrate 3 are arranged to overlap each other as viewed from the left-right direction and they are placed side by side in the left-right direction. Therefore, it is possible to suppress an increase in the size in the front-rear direction and the vertical direction.

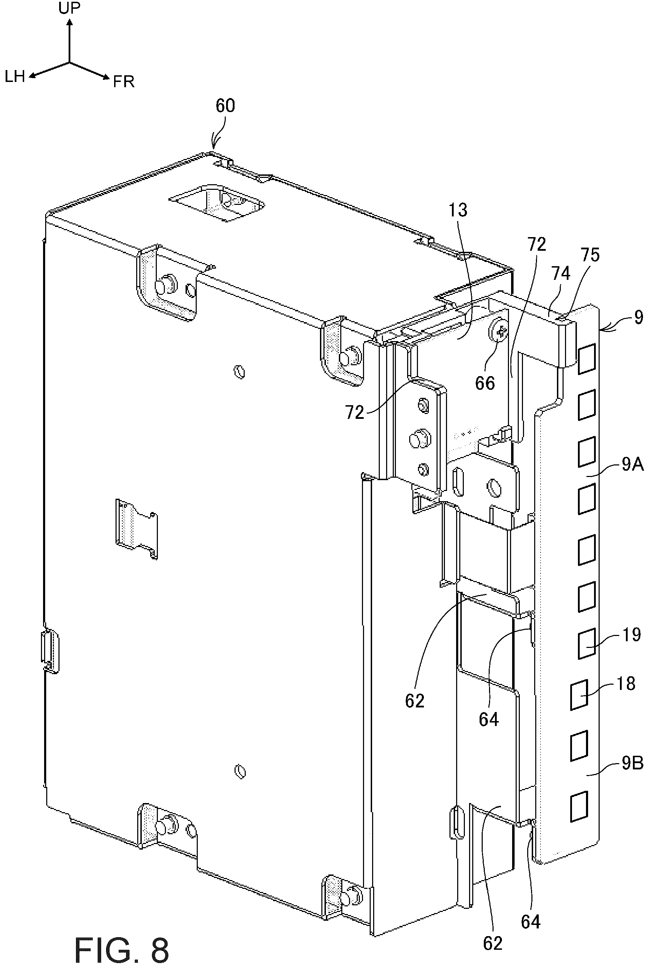

FIG. 8 is a perspective view showing the substrate accommodation body 60 as viewed from the left direction. As shown in FIG. 8, the communication substrate 13 is attached to the front surface of the substrate accommodation body 60. The communication substrate 13 is arranged at the upper end section of the front surface of the substrate accommodation body 60, at a position close to the left side of it. The communication substrate 13 is attached to the substrate accommodation body 60 via a support member 70, in a state where its flat surface faces the front surface of the substrate accommodation body 60, that is, in a state where the flat surface intersects with the front-rear direction.

The support member 70 is formed of a resin material and covers the entire flat surface of the communication substrate 13 that faces the substrate accommodation body 60. In the present embodiment, the support member 70 is provided with the upright sections 72 that cover the communication substrate 13 from the left-right direction. In this way, the support member 70 is arranged between the substrate accommodation body 60 and the communication substrate 13, and the communication substrate 13 is shielded from the substrate accommodation body 60, which is made of metallic material, by the support member 70. By this, in the relay device 1, wireless communication of the communication substrate 13 is suppressed from being affected from the substrate accommodation body 60. Therefore, the relay device 1 can provide an excellent communication environment in the POS system 100.

The communication substrate 13 is, in front view, arranged at a position overlapping the main substrate 2, and the flat surface of the communication substrate 13 is arranged so as to intersect a flat surface of the main substrate 2. Therefore, the main substrate 2 and the communication substrate 13 are arranged to overlap in the front-rear direction, and the flat surface of the communication substrate 13 is arranged to intersect with the front-rear direction. The communication substrate 13 of the present embodiment is formed such that a length dimension in the left-right direction is less than a length dimension in the left-right direction of the substrate accommodation body 60. By this, in the relay device 1, it is possible to suppress an increase in the length dimension in the left-right direction and the front-rear direction. Therefore, in the relay device 1, the size of the case 40 can be reduced.

In the relay device 1, the communication substrate 13 is provided at the upper end section of the front surface of the substrate accommodation body 60. Therefore, when the relay device 1 is installed, communication being blocked by peripheral devices and obstacles is suppressed. Therefore, the relay device 1 can provide an excellent communication environment in the POS system 100.

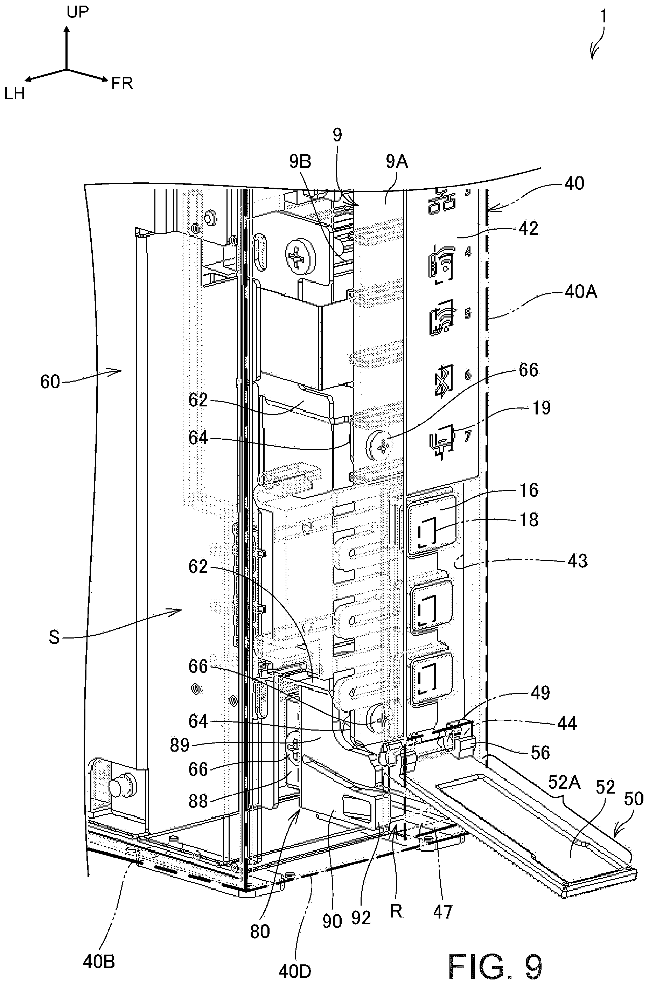

FIG. 9 is a perspective view showing a peripheral portion of switches 15 of the relay device 1 as viewed from the front surface. In FIG. 9, for convenience of explanation, the front plate 40A and the side plate 40B are indicated by two-dot chain line.

A display substrate 9 is attached to the front surface of the substrate accommodation body 60. The display substrate 9 is formed in an elongated plate shape. On a mounting surface 9A, which is one of the flat surfaces of the display substrate 9, a plurality of LEDs 19 are mounted on one end section side in the longitudinal direction, and a plurality of contact points 18, which are provided in each of the switches 15, are mounted on the other end section side.

The display substrate 9 is fixed to the substrate accommodation body 60 via a plurality of fixed sections 62 provided on the front surface of the substrate accommodation body 60. As shown in FIGS. 4 and 9, the fixed sections 62 extend a predetermined length from the front surface of the substrate accommodation body 60 towards the front direction, and an attachment piece 64 that has a flat surface facing the front surface of the substrate accommodation body 60 and the front plate 40A is provided at the tip end section of the fixed section 62. The fixed sections 62 of the present embodiment are provided in a lower section and in a substantially central section in the vertical direction of the substrate accommodation body 60.

The display substrate 9 is fixed to the substrate accommodation body 60 by being screwed together using a screw member 66 in a state in which the flat surfaces of the attachment pieces 64 are in contact with an attachment surface 9B, which is a flat surface opposite to the mounting surface 9A. The display substrate 9 of this embodiment is fixed to each of the fixed sections 62 such that one end section side on which the LEDs 19 are mounted is located at the upper section, and the other end section side on which the contact points 18 are mounted is located at the lower portion.

The display substrate 9 is arranged, by being attached to the fixed section 62, at the front direction side from the communication substrate 13 in a state that the mounting surface 9A faces toward the front direction. The display substrate 9 is arranged on the opposite side from the main substrate 2 and sub-substrate 3, with the communication substrate 13 interposed therebetween. The display substrate 9 is arranged at a position that overlaps the communication substrate 13 in front view, and the mounting surface 9A of the display substrate 9 is arranged so as to intersect the main substrate 2 and the sub-substrate 3. Therefore, the display substrate 9 and the communication substrate 13 are arranged to overlap in the front-rear direction, and the flat surface of the display substrate 9 is arranged to intersect with the front-rear direction. By this, in the relay device 1, it is possible to suppress an increase in the length dimension in the left-right direction and the front-rear direction. Therefore, in the relay device 1, the size of the case 40 can be reduced.

The support member 70 is provided with an extension section 74 extending toward the front direction. A groove section 75 is provided at the tip end section of the extension section 74, which has a groove shape that is recessed toward the left direction. An upper end section of the display substrate 9 is inserted into and held in place by the groove section 75. By this, the upper end section of display substrate 9 is supported by the support member 70. In other words, both the communication substrate 13 and the display substrate 9 are supported by the support member 70, which is the same member. Therefore, in the relay device 1, it is possible to support a plurality of substrates while suppressing an increase in the number of components, and it is possible to reduce the cost associated with manufacturing of the relay device 1.

The display substrate 9 is supported by each of the fixed sections 62 and the extension section 74, so that the mounting surface 9A is arranged facing and close to the rear surface of the front plate 40A. By this, LEDs 19 are arranged at a position that overlaps with the transmission section 42 in front view and that is close to the transmission section 42. Therefore, the light emitted from LEDs 19 is emitted to the outside of the case 40 through the transmission section 42. By this, in the relay device 1, the light emitted from LEDs 19 is suppressed from being emitted from any part other than transmission section 42, as so-called leakage light. In addition, the relay device 1 can improve visibility of the display section, which is formed by the display substrate 9 and the transmission section 42.

Each of the contact points 18 is arrange at a position that overlaps the operation portion 16 in front view and that is close to the operation portion 16. When the user presses the operation portion 16, the contact point 18 is pressed and a predetermined signal is transmitted to the communication control circuit 7. In this way, the switches 15 provided with the operation portions 16 and the contact points 18 work as an operation section or an input section of the relay device 1.

As shown in FIGS. 3 and 4, in the relay device 1, the various types of connectors mounted on the main substrate 2 and the sub-substrate 3 are arranged to open toward the rear direction of the case 40. On the other hand, the display section that the user sees, the switches 15 that the user operates, and the communication substrate 13 that performs wireless communication with external devices are all located on the opposite side than the various types of connectors, with the main substrate 2 and the sub-substrate 3 interposed therebetween.

By this, the various types of connectors can be collectively arranged on a single surface of the relay device 1, which makes wiring connections easier and also allows the routing of connected wires can be organized. Therefore, the relay device 1 can simplify the wiring structure of the POS system 100, which includes the external electronic device. Therefore, the relay device 1 can improve expandability and installation flexibility. In the relay device 1, the various types of connectors are collectively arranged on a side opposite than the display section that the user sees, the switches 15 that the user operates, the communication substrate 13 that performs wireless communication with external devices, and the like, so it is possible to improve the design.

Note that the above-described embodiment is merely an example of one aspect of the present disclosure, and can be arbitrarily modified and applied within the scope of the gist of the present disclosure.

In the embodiment described above, the relay device 1 is arranged so that the bottom plate 40D faces the installation surface. However, the present disclosure is not limited thereto, and the relay device 1 may be arranged such that another side surface faces the installation surface. For example, the relay device 1 may be installed such that the side plate 40B or the side plate 40C faces the installation surface. In this case, the plurality of leg sections 38 may be provided on the side plate 40B or the side plate 40C of the relay device 1.

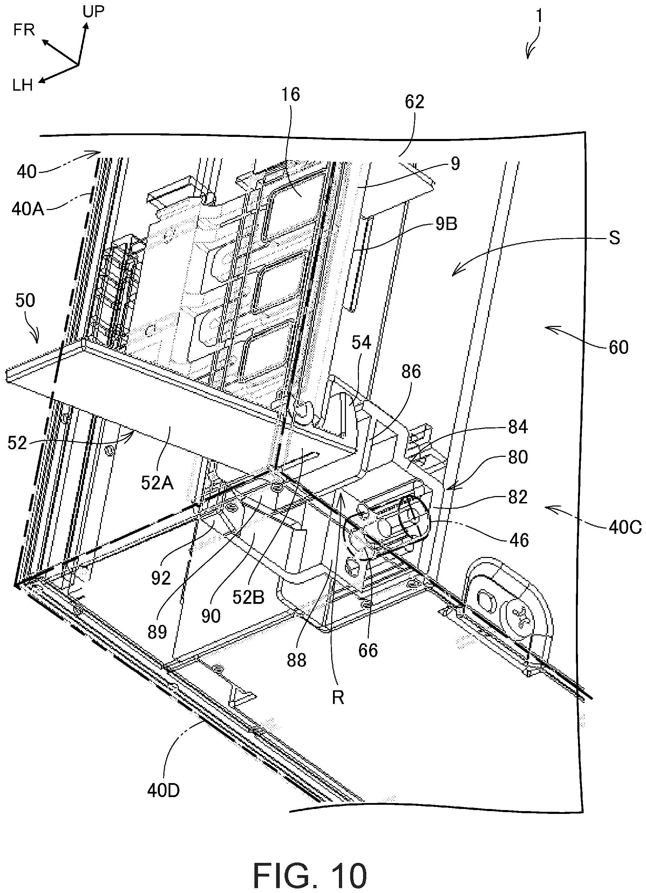

FIG. 10 is a perspective view of the relay device 1 as viewed from the lower surface side. In FIG. 10, for convenience of explanation, the front plate 40A, the side plate 40C, and the bottom plate 40D are indicated by two-dot chain line. As shown in FIG. 10, a holding member 80 that covers the opening section 47 from behind is provided inside the case 40. The holding member 80 is formed of a resin material that is flexible and capable of elastic deformation. The holding member 80 may be formed of any material as long as the material is flexible and elastically deformable, such as a metallic material.

The holding member 80 has a rear surface section 82 that is a rectangular plate-shaped and that is located between the front surface of the substrate accommodation body 60 and the opening section 47. The rear surface section 82 is arranged such that a flat surface thereof intersects with the front-rear direction and faces the front surface of the substrate accommodation body 60 and the opening section 47. The rear surface section 82 is formed such that its dimension in the vertical direction is longer than a dimension of the opening section 47 in the vertical direction. The rear surface section 82 of the present embodiment is arranged such that its one flat surface is in contact with the front surface of the substrate accommodation body 60. An entire right end section of the rear surface section 82 is in contact with the side plate 40C, and an entire lower end section of the rear surface section 82 is in contact with the bottom plate 40D.

The holding member 80 has an upper surface section 84 that extends from an upper end of the rear surface section 82 toward the front direction. A front end section of the upper surface section 84 is arranged at a predetermined distance from the attachment piece 64, which functions as a pivoting stop section of the cover 50. The front end section of the upper surface section 84 is in contact with the side plate 40C at the entire right side of the end section.

The front end section of the upper surface section 84 has a plate-like shielding section 86 that extends downward from that front end section. The shielding section 86 is arranged such that its flat surface intersects with the front-rear direction and that faces the front surface of the substrate accommodation body 60 and the opening section 47. The lower end section of the shielding section 86 is arranged at a predetermined distance from the bottom plate 40D. An entire right side of the shielding section 86 is in contact with the side plate 40C.

Some POS systems, such as JP-A-2006-285805's USB hub, have a relay device that connects a plurality of devices to each other. Some of such relay devices have a case, and the case has a cover that can be opened and closed to cover operation sections such as switches, and connectors, provided on the surface. Some of these relay devices have an opening section in the case in order to pivotably attach the cover.

In the relay device as described above, if an opening section is provided in the case, there is concern that foreign matter such as dirt or dust will enter inside of the case through the opening section.

As shown in FIG. 5, when the cover 50 is in the opened state, the pressing section 52B and the contact section 54 enter between the attachment piece 64 and the shielding section 86 in the front-rear direction. In the relay device 1, providing the shielding section 86 can be suppressed from adhering of foreign matter, such as dust and dirt that has entered into the case 40 together with the pressing section 52B or the contact section 54, to the substrate accommodation body 60, the display substrate 9, and the like.

As shown in FIGS. 6 and 10, the holding member 80 has a plate-like left surface section 88 that extends from the entire left side of the rear surface section 82 toward the front direction. A flat surface of the left surface section 88 intersects with the left-right direction, and the entire upper side of the left surface section 88 is connected to the left end section of the upper surface section 84. An entire lower end section of the left surface section 88 is in contact with the bottom plate 40D. In the present embodiment, the front end section of the left surface section 88 is located behind the shielding section 86. The holding member 80 is fixed to the case 40 by screwing the screw member 66, which is inserted into a screw hole provided in left surface section 88, into a boss 46 that extends from the side plate 40C in the left direction. The holding member 80 is not limited to be fixed to the case 40, for example, it may be fixed to the substrate accommodation body 60 by a screw member 66 or the like penetrating through the rear surface section 82.

As shown in FIGS. 6 and 9, the upper section side of the front end section of the left surface section 88 is provided with a plate-like extension section 89 that extends in the front direction. A flat surface of the extension section 89 intersects with the left-right direction. The extension section 89 extends below the display substrate 9 to a position that is close to the front plate 40A, and is located to the left side from the opening section 47 and the cover 50.

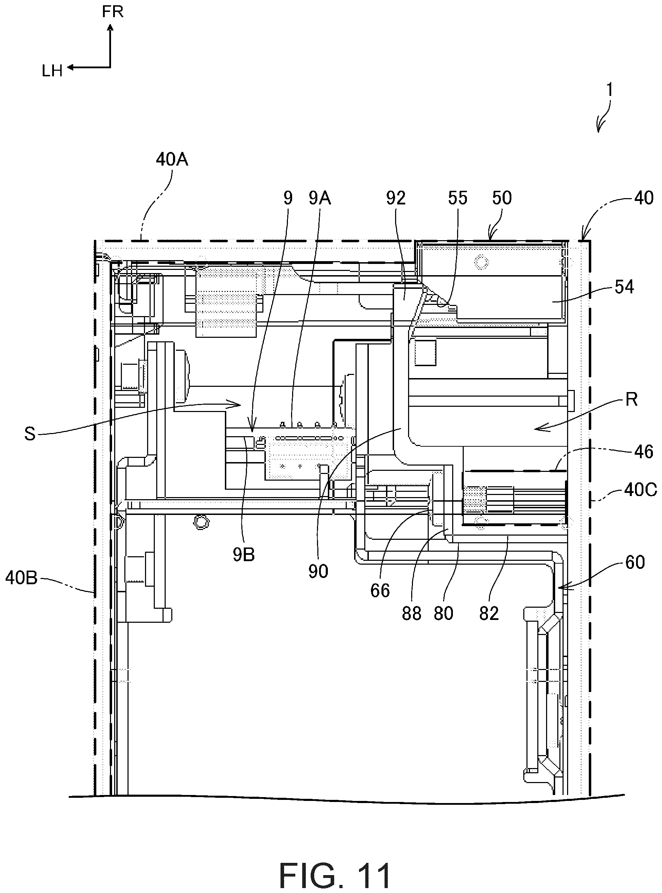

FIG. 11 is a bottom view of the relay device 1. In FIG. 11, for convenience of explanation, the bottom plate 40D is indicated by two-dot chain line. As shown in FIG. 11, the lower section side of the front end section of the left surface section 88 is provided with a plate-like holding section 90 that extends in the front direction. The holding section 90 of the present embodiment extends leftward from the lower section side of the front end section of the left surface section 88, and then curves and extends in the front direction. The holding section 90 is provided so that at least a flat surface of the tip end section intersects with the left-right direction. In other words, a plate thickness direction of the tip end section of the holding section 90 is same to the left-right direction. As shown in FIGS. 9 and 10, the holding section 90 extends to the position that is close to the front plate 40A through below the extension section 89, and is located to the left side from the opening section 47 and the cover 50.

As shown in FIG. 11, a contact piece section 92 is provided on the surface of the holding section 90 that faces the cover 50. The contact piece section 92 is provided at the tip end of the holding section 90 and is formed to extend to the right so as to come closer to the cover 50 toward the front direction.

When the cover 50 is in the closed state, the contact piece section 92 comes into contact with an inclined surface section 55 that is provided in the contact section 54. The inclined surface section 55 is formed by cutting the left edge section of the contact section 54 at an angle from the cover section 52 side towards the opposite edge section side to the cover section 52.

When the cover 50 is in the closed state, the contact piece section 92 comes into contact with the inclined surface section 55. In this case, the contact piece section 92 biases the inclined surface section 55 by the elastic force of the extension section 89. By this, the cover 50 is held in the closed state by the holding member 80. Therefore, in the relay device 1, the operation portions 16 are covered with the cover 50, and the occurrence of an erroneous operation for the operation portions 16 is suppressed. Note that the attachment sections 44 are formed in a shaft shape that extends in the horizontal direction. By this, when the cover 50 is in the closed state, the cover 50 is suppressed from pivoting in the predetermined direction due to gravity.

When the user presses the pressing section 52B of the cover 50, the cover section 52 pivots. The inclined surface section 55 is moved in the rear direction and in the upper direction, and the contact piece section 92 is moved in the left direction along the inclined surface section 55 while being flexed. By this, the contact section 54 is separated from the position where the contact piece section 92 can be biased. The cover 50 is pivotable to a position where the contact section 54 contacts the attachment piece 64.

As shown in FIG. 10, inside the holding member 80, there is a space R that is partitioned from space S along with the front plate 40A, the side plate 40C, and the bottom plate 40D. The space R is continuous with the opening section 47. Therefore, the opening section 47 is shielded from the space S other than the space R by being surrounded from inside the case 40 by the holding member 80, the front plate 40A, the side plate 40C, and the bottom plate 40D. In other words, the holding member 80 shields various members arranged in the case 40 such as the substrate accommodation body 60 and the display substrate 9 from the opening section 47. By this, the relay device 1 can suppress the adherence of foreign matter, such as dust and dirt that will enter into the case 40 together with the pressing section 52B or the contact section 54, to the substrate accommodation body 60, the display substrate 9, and the like.

In the relay device 1, the holding section 90 that holds the cover 50 in the closed state is provided integrally with the holding member 80 that shields various members arranged in the case 40, such as the substrate accommodation body 60 and the display substrate 9, from the opening section 47. By this, it possible to reduce the number of components in relay device 1. Therefore, in the relay device 1, it is possible to suppress cost related to manufacturing, and it is possible to efficiently arrange various components in the space S inside the case 40.

The above-described embodiment is merely an example of one aspect of the present disclosure, and can be arbitrarily modified and applied within the scope of the gist of the present disclosure.

In the embodiment described above, the relay device 1 is arranged so that the bottom plate 40D faces the installation surface. However, the present disclosure is not limited thereto, and the relay device 1 may be arranged such that another side surface faces the installation surface. For example, the relay device 1 may be installed such that the side plate 40B or the side plate 40C faces the installation surface. In this case, the plurality of leg sections 38 may be provided on the side plate 40B or the side plate 40C of the relay device 1.

In addition to devices that use USB connectors, such as in JP-A-2006-285805, there is a case where devices that use other standards or types of connectors, such as serial, are connected to a POS system. In this case, there is concern that such devices cannot be connected to the system described in JP -A-2006-285805. In addition, in a case where a plurality of devices are connected, there is concern that routing of wiring of the POS system may be complicated due to a power supply line included in each of the devices.

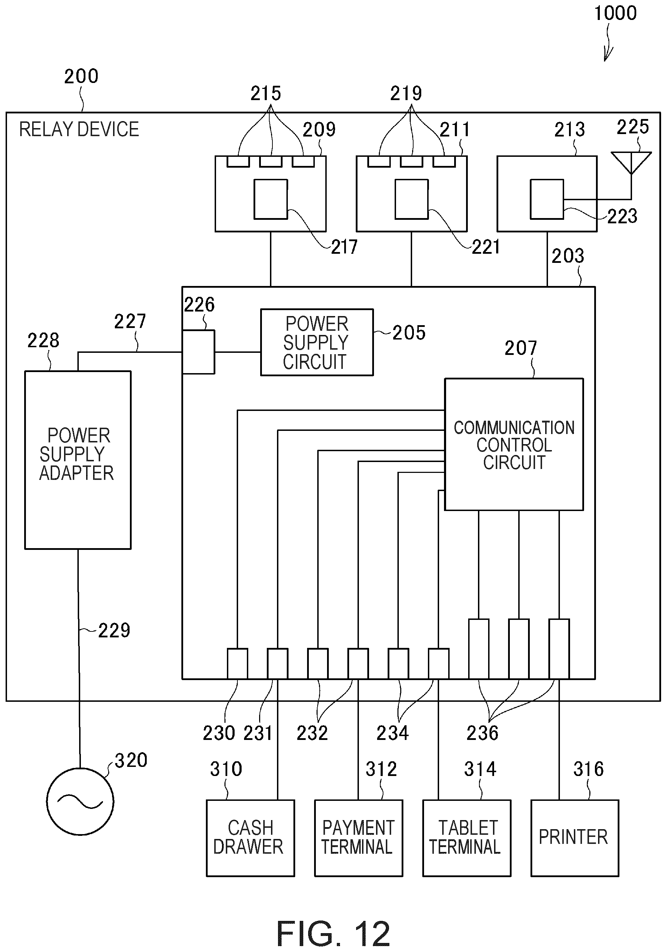

FIG. 12 is a block diagram showing a POS system 1000 according to the present embodiment. The POS system 1000 is equipped with a relay device 200. The relay device 200 is equipped with a main substrate 203. On the main substrate 203, a power supply circuit 205 and a communication control circuit 207 are mounted. The main substrate 203 is connected to a switch module 209, a LED module 211, and a wireless module 213. Each of the switch module 209, the LED module 211, and the wireless module 213 is equipped with a substrate.

Switches 215 and a switch control circuit 217 are mounted on the switch module 209. A plurality of LEDs 219 and an LED control circuit 221 are mounted on the LED module 211. A communication circuit 223 is mounted on the wireless module 213, and an antenna 225 is connected to the communication circuit 223. Each of the switch module 209, the LED module 211, and the wireless module 213 corresponds to "another substrate" of the present disclosure.

A power supply connector 226 is connected to a power supply circuit 205. A power supply adapter 228 is connected to the power supply connector 226 via a power supply adapter cable 227. The power supply adapter 228 is a power supply device that converts AC power supplied from a commercial power supply 320 into DC power, AC power of a predetermined voltage, or the like. A power supply cable 229 is connected to the power supply adapter 228 so that it can be inserted and removed. The power supply cable 229 is connectable to the commercial power supply 320. In this embodiment, the power supply adapter cable 227 works as a so-called DC cable, and the power supply cable 229 works as a so-called AC cable. The power supply cable 229 corresponds to the "power supply cord" of the present disclosure.

To the communication control circuit 207, multi standards of connectors are connected. In this embodiment, to the communication control circuit 207, a LAN connector 230, a modular connector 231, a plurality of serial connectors 232, a plurality of USB Type-C connectors 234, and a plurality of USB Type-A connectors 236 are connected. Each of these connectors provided in the relay device 200 works as a plug-in socket for a plug.

The LAN connector 230 is RJ-45 connector. The relay device 200 may be connected to a predetermined communication network via a LAN cable connected to the LAN connector 230. The communication network is a network composed of a public line network, a leased line, other communication lines, and various communication equipment, and it is not limited to a specific form. The modular connector 231 is, for example, RJ-11 connector to which a cash drawer 310 is connected.

The serial connectors 232 are RS-232C connectors to which the payment terminal 312 is connected. The payment terminal 312 is, for example, a card reader or the like. Note that other devices may be connected to the serial connectors 232.

A tablet terminal 314 is connected to the USB Type-C connector 234. In the present embodiment, the tablet terminal 314 works as a so-called POS terminal. Note that the tablet terminal 314 may work as a payment terminal. To the USB type-A connector 236, for example, a printer 316 that prints receipts and the like is connected. To the USB Type-A connector 236, for example, various devices such as a display device such as a monitor and a handheld scanner may be connected.

In this way, devices with different types of connectors can be connected to the relay device 200 through various types of connectors. Therefore, the relay device 200 and the POS system 1000 can form a more organized system. The cash drawer 310, the payment terminal 312, and the printer 316 correspond to "POS peripheral devices" of the present disclosure.

The LAN connector 230, the modular connector 231, the plurality of serial connectors 232, the plurality of USB Type-C connectors 234, and the plurality of USB Type-A connectors 236 correspond to the "equipment connector" of the present disclosure.

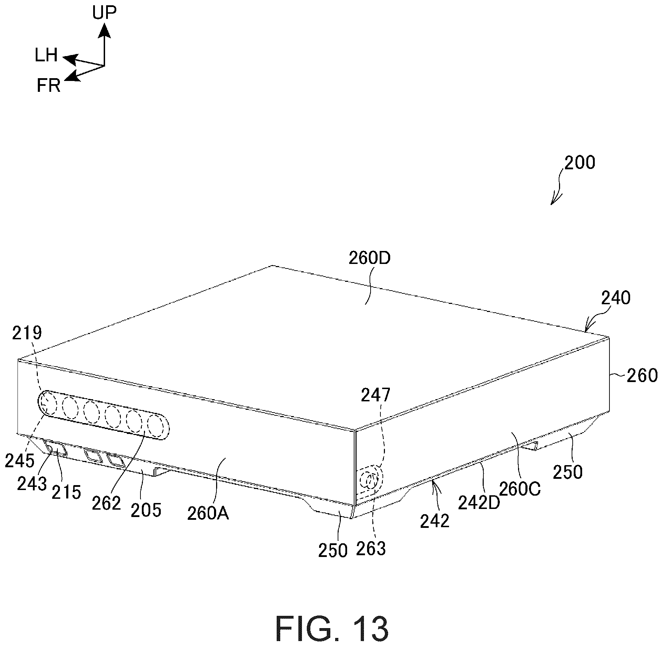

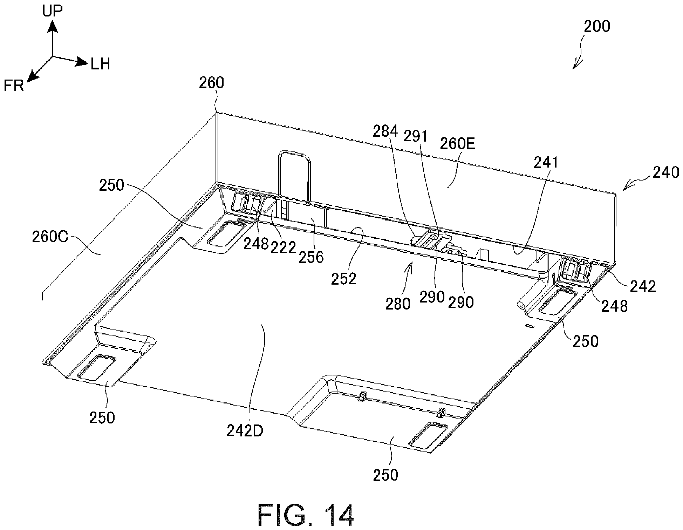

FIG. 13 is a perspective view of the relay device 200 as viewed from the front surface. FIG. 14 is a perspective view of the relay device 200 as viewed from below the rear surface. As shown in FIGS. 13 and 14, the relay device 200 is equipped with a case 240 made of resin. The case 240, when installed on the installation surface, has a flat box shape whose height dimension is less than a length dimension in the front-rear direction and a length dimension in the left-right direction. The relay device 200 is formed in a substantially rectangular shape in plan view. The case 240 is formed by covering a box-shaped case main body 242 with a box-shaped lid body 260.

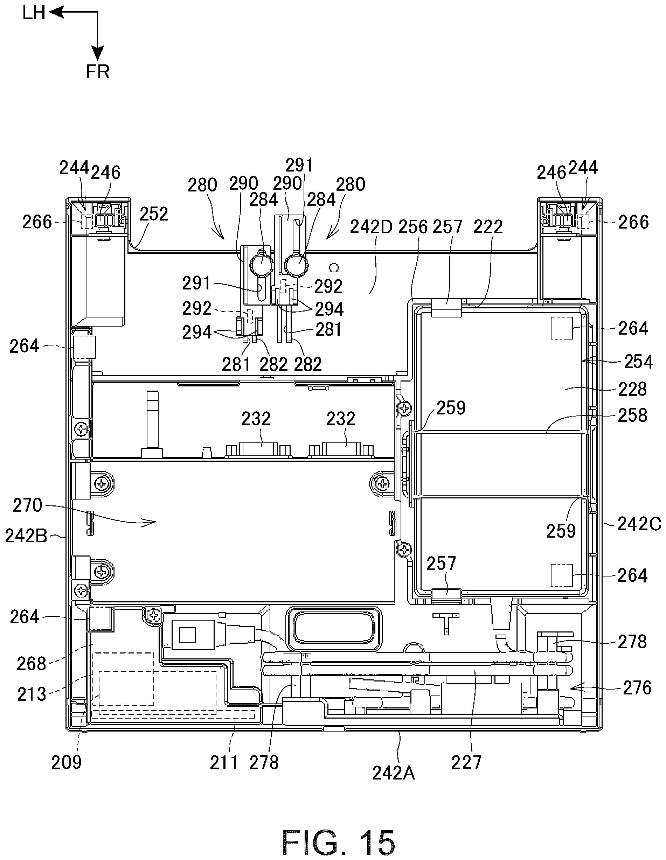

FIG. 15 is a plan view of the relay device 200 with the lid body 260 removed. In FIG. 15, for convenience of explanation, the cushioning materials 264 and the engagement pieces 266 are indicated by two dot chain line. As shown in FIGS. 14 and 15, the case main body 242 is open in the upper surface and the rear surface, and has a front plate 242A that forms the front surface, a pair of side plates 242B, 242C that from the left side surface and the right side surface, and a bottom plate 242D that forms the bottom surface.

As shown in FIG. 13, the front plate 242A is provided with a plurality of insertion holes 243 that are through holes through which the respective switches 215 are inserted, and a plurality of exposure holes 245 that are through holes for exposing the LEDs 219 to the outside of the case main body 242. On each front end of the pair of side plates 242B and 242C, receiving sections 247 that are recessed inward from the outer surface of the case main body 242 are provided. The receiving sections 247 are formed in a state where a portion located in the front surface side is opened.

As shown in FIGS. 14 and 15, box-shaped accommodation sections 244 that accommodate engagement pieces 246 are provided in both ends of the rear sections of the case main body 242 in the left-right direction. Each of the accommodation sections 244 are open on the upper surface, and the engagement pieces 246 are exposed from the upper surface. The engagement pieces 246 are formed into a claw shape whose upper section bends toward the outside of the case main body 242 along the left-right direction. The engagement pieces 246 are held in the accommodation section 244 so as to be movable in the left-right direction, and are biased by spring members or the like. As shown in FIG. 14, operation portions 248 that can be slid by the user's finger are provided at the lower end of the engagement pieces 246. The operation portions 248 are exposed on the rear surface side of the accommodation section 244.

As shown in FIG. 14, a plurality of leg sections 250 are provided on the bottom surface of the bottom plate 242D. The leg sections 250, which have a rectangular shape in plan view, are arranged at each of the corners of the bottom plate 242D. The bottom plate 242D is spaced away from the installation surface by these leg sections 250. As shown in FIG. 15, a cutout section 252, which is formed by cutting out the rear end toward the front end, is provided in the rear end section of the bottom plate 242D. The cutout section 252 is arranged between the pair of accommodation sections 244 in plan view.

As shown in FIGS. 13 and 14, the lid body 260 is opened on the lower surface, and has a front plate 260A that forms the front surface, a pair of side plates 260B, 260C that form the left side surface and the right side surface, an upper plate 260D that forms the upper surface, and a rear plate 260E that forms the rear surface. The front plate 260A is provided with a transmission section 262 that transmits light of the LEDs 219. The transmission section 262 is formed by a transparent member or the like at positions that overlap the plurality of exposure holes 245. In the relay device 200, the LED module 211, the exposure holes 245, and the transmission section 262 work as a display section. On each front end section of the pair of the side plates 260B, 260C, there are protruding sections 263 that protrude toward the case main body 242. The protruding sections 63 are arranged at positions corresponding to the receiving sections 247, and when the lid body 260 covers the case main body 242, they fit into the receiving sections 247.

On the surface of the upper plate 260D that faces the case main body 242, a plurality of cushioning materials 264 are provided. The cushioning materials 264 are, for example, flexible members such as a rubber material. When the box-shaped case main body 242 is covered with a box-shaped lid body 260, the cushioning materials 264 come into contact with various components accommodated in the case main body 242. On the surface of the upper plate 260D that faces the case main body 242, a pair of engagement pieces 266 is provided. Each of the engagement pieces 266 is provided at a position where it can engage with each of the engagement pieces 246. When the lid body 260 covers the case main body 242, each of the engagement pieces 266 engages with each of the engagement pieces 246.

As shown in FIG. 14, the rear plate 260E extends in the vertical direction to a position where the lower end section of the rear plate 260E is close to the bottom plate 242D. Therefore, when the box-shaped case main body 242 is covered with the box-shaped lid body 260, in the case 240, a pullout opening 241 is formed, which is a hole shape surrounded by the cutout section 252 and the lower end section of the bottom plate 242D.

The upper plate 260D is formed to be a flat surface. By this, it is possible to mount other devices provided in the POS system 1000 on the upper surface of the relay device 200.

As shown in FIG. 15, in the central section of the case main body 242, the power supply adapter 228 and a main substrate accommodation body 270 in which the main substrate 203 is accommodated are arranged side by side in the horizontal direction. In other words, the power supply adapter 228 and the main substrate accommodation body 270 are arranged so as to be aligned in a predetermined direction in plan view. In the present embodiment, the power supply adapter 228 and the main substrate accommodation body 270 are arranged side by side so as to be adjacent to each other along the left-right direction. By this arrangement, the power supply adapter 228 and the main substrate 203, which is accommodated in the main substrate accommodation body 270, are arranged side by side in the case 240.

By this, it is possible to suppress an increase in the height dimension in the relay device 200. In the relay device 200, the case 240 can accommodate both the main substrate accommodation body 270 to which various types of connectors can be connected and the power supply adapter 228 that supplies power to the relay device 200. Therefore, even when a plurality of so-called POS terminals or POS peripheral devices are connected to the relay device 200 and the POS system 1000, a more organized system can be formed.

Note that, in the case main body 242, other devices, components, members, and the like may be arranged between the power supply adapter 228 and the main substrate accommodation body 270.

The power supply adapter 228 of this embodiment is a general-purpose product. The power supply adapter 228 is provided with a power supply connector 222 into which the power supply cable 229 can be inserted and removed.

The power supply adapter 228 is accommodated in an adapter accommodation section 254 provided inside the case main body 242. The adapter accommodation section 254 is a space that is surrounded by a plate-shaped positioning section 256 that rises upright from the upper surface of the bottom plate 242D. When the power supply adapter 228 is accommodated in the adapter accommodation section 254, the power supply adapter 228 is surrounded by the positioning section 256. By this, the power supply adapter 228 is restricted from moving in the horizontal direction. A claw-shaped engagement section 257 is provided at a predetermined portion of the upper end of the positioning section 256. By this, the power supply adapter 228 is restricted from moving in the vertical direction.

The power supply adapter 228 of this embodiment is a general-purpose product. The power supply adapter 228 is provided with a power supply connector 222 into which the power supply cable 229 can be inserted and removed. The power supply adapter 228 is accommodated in the adapter accommodation section 254 so that the power supply connector 222 is positioned on the rear end side of the case main body 242.

A pressing spring 258 is provided inside the case main body 242. The pressing spring 258 is a member formed by bending a linear metallic material into a U-shape. The pressing spring 258 is formed so that both ends thereof in the longitudinal direction can be inserted into a pair of insertion holes 259 that is provided at an upper end of a predetermined portion of the positioning section 256. The pressing spring 258, by being inserted into the insertion holes 259, is arranged so as to press the upper surface of the power supply adapter 228. By this, the power supply adapter 228 is fixed to the case main body 242.

As described above, the pressing spring 258 is formed to be easily attached and detached. Therefore, in the relay device 200, the power supply adapters 228, which are various types of general-purpose products, can be fixed so as to be easily attached and detached. The pressing spring 258 corresponds to a "fixed section" of the present disclosure.

Inside the case main body 242, a cord holding section 276 is provided at a position close to a corner section that is formed by the front plate 242A and the side plate 242C. The cord holding section 276 has a pair of column-shaped winding sections 278 that extend from the front plate 242A toward rear direction. The pair of winding sections 278 is arranged with a predetermined distance between them in the left-right direction. The power supply adapter cable 227 is wound around the pair of winding sections 278. In this case, the power supply adapter cable 227 may be wound around the pair of winding sections 278 in a figure eight pattern.

By this, the relay device 200 enables that the space required inside the case 240 for accommodating the power supply adapter cable 227 can be reduced and also that the power supply adapter cable 227 can be accommodated in a state capable of reducing effects of noise for other electrical components.

Inside the case main body 242, a connection substrate accommodation body 268 is provided at a position close to a corner section that is formed by the front plate 242A and the side plate 242B. Inside the connection substrate accommodation body 268, the switch module 209, the LED module 211, and the wireless module 213 are accommodated so as to overlap each other in the vertical direction. By this, the space inside the case 240 of the relay device 200 required for accommodating the switch module 209, the LED module 211, and the wireless module 213 can be further reduced, and the dimension of the relay device 200 in plan view can be reduced. Therefore, the relay device 200 enables reduction in the size of the case 240.

Note that in the case main body 242, the switch module 209, the LED module 211, and the wireless module 213 are arranged so that they overlap each other in the vertical direction, but other devices, components, members, or the like may be arranged between each of these modules, which are arranged facing each other.

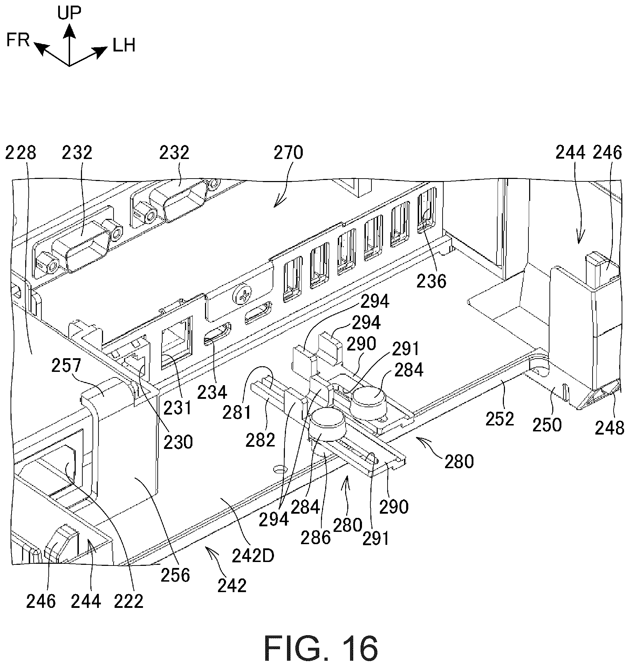

FIG. 16 is a perspective view of various types of connectors provided in the relay device 200 as viewed from the rear surface. As described above, the main substrate 203 is accommodated in the main substrate accommodation body 270. In the main substrate accommodation body 270, as shown in FIG. 16, the LAN connector 230, the modular connector 231, the serial connectors 232, the plurality of USB Type-C connectors 234, and the plurality of USB Type-A connectors 236 are arranged so as to be open toward the rear direction of the case 240. In this embodiment, the plurality of serial connectors 232 are arranged above the other connectors.

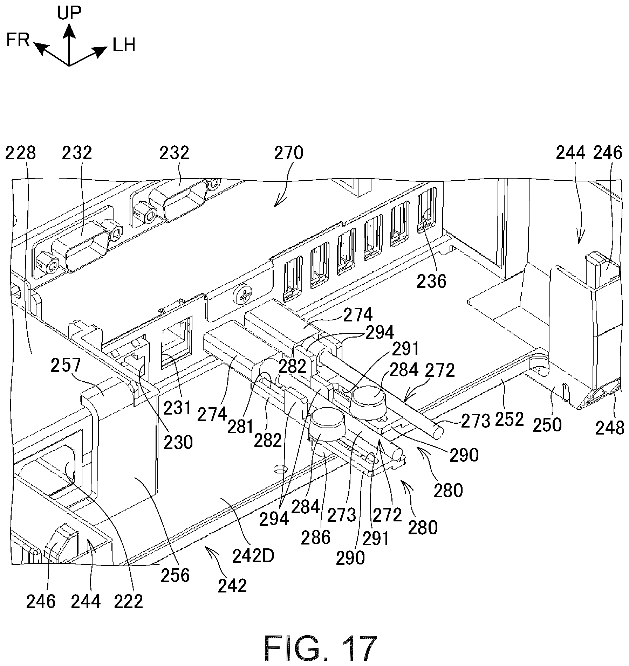

To the rear end of the bottom plate 242D, two cord holders 280 are attached. The cord holders 280 are formed to support from below and to hold connector-equipped cables 272 that will be inserted into and removed from the USB Type-C connectors 234. The cord holders 280 prevent the connector-equipped cables 272 from coming off. Note that the connector-equipped cable 272 will be described later in FIG. 17. The cord holder 280 has a fixed rail section 282 and a pull-out prevention member 290 that is movable with respect to the fixed rail section 282.

As shown in FIG. 16, the fixed rail section 282 has a pair of rib shape portions that rises upright from the bottom plate 242D. The fixed rail section 282 extends along the front-rear direction of the case 240. By providing the rib shape portions, a groove 281 is formed between the rib shape portions of the fixed rail section 282. On the bottom plate 242D, a boss 286 that protrudes upward is provided at a position adjacent to the fixed rail section 282. The boss 286 has a screw hole that is recessed downward from its upper end.

The pull-out prevention member 290 is a slider-shaped member that is formed of a resin member separate from the case 240. The pull-out prevention member 290 is an elongated member that extends along the front-rear direction of the case 240 in plan view. As shown in FIG. 15, a protrusion 292 that protrudes from the lower surface of the pull-out prevention member 290 and that fits in the groove 281 is provided on the pull-out prevention member 290. By this, the pull-out prevention member 290 is guided by the fixed rail section 282, and can move in a direction that the connector-equipped cable 272 is inserted and removed. In addition, in the relay device 200, it allows to suppress the pull-out prevention member 290 from deviating in the left-right direction. The pull-out prevention member 290 is guided to the fixed rail section 282, so the pull-out prevention member 290 can move within a range that fits inside the case 240. By this, it is possible to suppress an increase in size of the relay device 200.

The pull-out prevention member 290 has an elongated hole 291 that penetrates therethrough in the vertical direction. The elongated hole 291 extends along the front-rear direction of the case 240 in plan view. A stopper screw 284 is inserted into the elongated hole 291. The stopper screw 284 is a so-called thumb screw. The stopper screw 284 is screwed into the screw hole of the boss 286. By operating the stopper screw 284 without using a tool, the user can slide the pull-out prevention member 290 and fix it at a desired position.

On the front end section of the pull-out prevention member 290, a pair of contact sections 294 that rises upright in the upper direction is provided. The contact sections 294 are plate-shaped sections that are arranged, along the left-right direction, side by side with a space between them in which the cable section 273 of the connector-equipped cables 272 can be inserted.

FIG. 17 is a perspective view of various types of connectors provided in the relay device 200 in a state where the connector-equipped cable 272 is connected, as viewed from the rear surface. When the connector-equipped cable 272 is connected to the USB Type-C connector 234, the cable section 273 is first inserted between the pair of contact sections 294. Then, the tip end section of the connector section 274 is inserted into the USB Type-C connector 234.

Thereafter, the user slides the pull-out prevention member 290 to a position where the pair of contact sections 294 comes into contact with the rear end of the connector section 274. When the pull-out prevention member 290 is moved to the position where the pair of contact sections 294 contact the connector section 274, the user tightens the stopper screw 284. By this, the pull-out prevention member 290 is fixed to that position. In this way, the connector section 274 is sandwiched between the pair of contact sections 294 and the rear surface of the main substrate accommodation body 270. By this, it is possible to suppress the connector section from being separated from the USB Type-C connector 234.

The pull-out prevention member 290 is formed so as to be slidable in the front-rear direction, so the position at which it is fixed can be changed according to the size, shape, and the like of the connector section 274 of the connector-equipped cable 272. By this, the relay device 200 can suppress the connector-equipped cable 272 from being disconnected from the USB Type-C connector 234, regardless of the size, shape, or the like of the connector section 274.

As described above, a plurality of the pull-out prevention members 290 are provided corresponding to the number of the USB Type-C connectors 234. The plurality of pull-out prevention members 290 are identical in form, and the parts are standardized. In the present embodiment, the plurality of pull-out prevention members 290 are provided on the fixed rail sections 282 so that they can move independently. However, this is not limited to this, and the plurality of pull-out prevention members 290 may be formed as a single member and provided on the fixed rail section 282 as a single movable member.

Next, operation of the relay device 200 will be described. As described above, when connecting various types of cables to the relay device 200, the user first slides the operation portions 248. By this, the engagement pieces 246 are separated from the engagement pieces 266, and the rear end side of the lid body 260 is moved upward by elastic force of the cushioning materials 264. After that, the user, by using the opened portion of the receiving section 247, disengages the protruding sections 63 from the receiving sections 247, and removes the lid body 260 from the case main body 242. By this, the user can access various types of connectors arranged on the rear surface of the main substrate accommodation body 270, the power supply connector 222, and the power supply adapter 228.

After performing desired operations on the relay device 200, the user attaches the lid body 260 to the case main body 242. In this case, the cables connected to the various types of connectors arranged on the rear surface of the main substrate accommodation body 270 and the power supply cable 229 are all pulled out through the pullout opening 241. The pullout opening 241 is opened so as to face the installation surface of the relay device 200, so the cables connected to the various types of connectors and the power supply cable 229 all extend downward. In this way, in the relay device 200, the various cables and the power supply cable 229 are collectively pulled out through the single pullout opening 241, so that the arrangement and routing of the cables can be easily performed.

In addition, the rear surface of the relay device 200 is covered by the rear plate 260E, so the various cables and the power supply cable 229 are shielded as viewed from the rear surface, which can improve the design.

In the relay device 200, the various cables and the power supply cable 229 pulled out from the pullout opening 241 may be routed between the bottom plate 242D and the installation surface. In this case, with the relay device 200, by arranging these cables between each of the leg sections 250, it is possible to collectively arrange the cables within the installation area of the relay device 200.

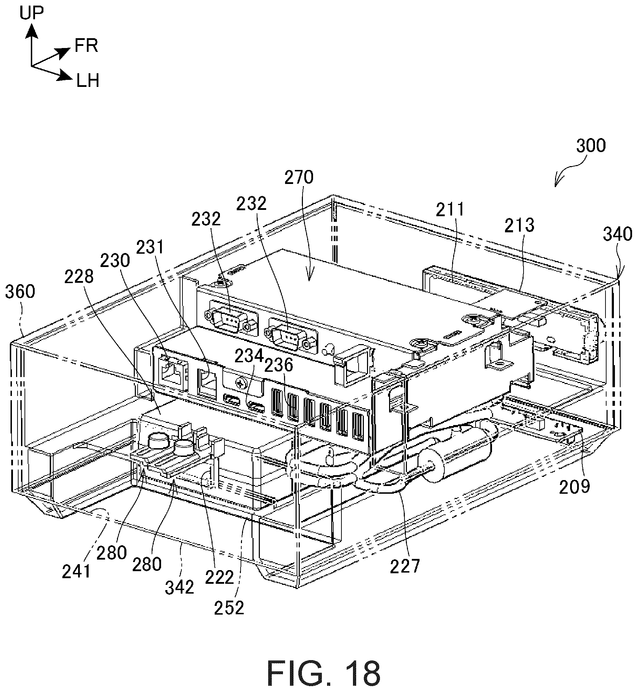

Next, a modification of the present embodiment will be described. FIG. 18 is a perspective view of a relay device 300 in a modification of the present disclosure, as viewed from the rear surface. In FIG. 18, for convenience of description, a case 340 is indicated by two-dot chain line. In FIG. 18, the same reference numerals are given to the same portions as those in FIG. 13 to FIG. 17, and the description thereof is omitted. As shown in FIG. 18, the relay device 300 in the modification example of the present disclosure is arranged so that the main substrate accommodation body 270 and the power supply adapter 228 overlap each other in plan view.

The relay device 300 is equipped with the case 340. Similar to the case 240, the case 340 is formed by covering a box-shaped case main body 342 with a box-shaped lid body 360. The case 340, similar to the case 240, is provided with a pullout opening 341 that opens downward.

Inside the case 340, the power supply adapter 228 and the power supply adapter cable 227 are arranged below the main substrate accommodation body 270. The power supply adapter 228 and the power supply adapter cable 227 are arranged side by side along the left-right direction. By this, the relay device 300 can suppress an increase in the size in the horizontal direction.

Note that the main substrate accommodation body 270 and the power supply adapter 228 may be arranged in the case 340 so that at least part of them overlap in plan view. Other devices, components, members, or the like may be arranged between the main substrate accommodation body 270 and the power supply adapter 228. By such an arrangement, the power supply adapter 228 and the main substrate 203, which is accommodated in the main substrate accommodation body 270, are arranged to overlap each other in the vertical direction.

Note that the above-described embodiment is merely an example of one aspect of the present disclosure, and can be arbitrarily modified and applied within the scope of the gist of the present disclosure.

In the above embodiment, the power supply adapter 228 is accommodated in the relay device 200 and the relay device 300, but it is not limited to this configuration. Instead of the power supply adapter 228, various power supply devices such as a battery pack may be accommodated in it.

Each section shown in FIG. 1 is an example, and a specific mounting form is not particularly limited. In other words, it is not necessary to mount hardware that corresponds to each section individually, and it is of course also possible to configure it in which a single processor executes programs to realize the functions of each section. In the above-described embodiments, some of the functions implemented in software may be implemented in hardware, or some of the functions implemented in hardware may be implemented in software.

Unless otherwise specified, the directions, such as horizontal and vertical, and various shapes in the above-mentioned embodiments include those directions and numerical values, including the so-called equivalent range that achieves the same effect as those directions, values, and the shapes.

### Summary of present disclosure

Hereinafter, a summary of the present disclosure is noted.

Note 1: The relay device includes a plurality of types of connectors to which external electronic devices are connected; a control section that controls communication between the electronic devices; a power supply section that supplies power input from outside to the control section and to an electronic device that is connected to a connector via at least one of the connectors; a main substrate on which the control section and at least one of the connectors are provided; and a communication substrate that is connected to the main substrate and that has a communication section that performs wireless communication, wherein the connector is arranged at one end section of the main substrate and the communication substrate is arranged at an other end section side, which is a side opposite from the one end section in a first direction over a flat surface of the main substrate. By this, the relay device can connect various electronic devices to this relay device, and can supply power to predetermined electronic devices. In the relay device, the communication substrate, the main substrate, and the connector are arranged in this order in the first direction. By this, the relay device can organize routing of cables such as power supply line and signal lines, and can simplify the wiring structure of the POS system that includes the external electronic device. Therefore, the relay device can be improved in terms of expandability and installation flexibility.

Note 2: The relay device according to Note 1, wherein when a printing device as the electronic device is connected to any of the connectors, the control section transmits a signal for controlling the printing device to the printing device. By this, the relay device can control an operation of the predetermined printing device. Therefore, the relay device can simplify the structure of the printing device. For example, the relay device can reduce the size of the printing device, and it is also possible to connect a printing device in which a circuit that performs a predetermined control is omitted to form a POS system , which makes it possible to form a more organized POS system.

Note 3: The relay device according to Note 2, wherein, when the printing device is connected to any of the connectors, the control section causes the power supply section to supply power that enables drive of the printing device to the printing device via the connector. By this, the relay device can be connected to a printing device in which a power supply cord is omitted to form a POS system. By this, it is possible to simplify the relay device and the wiring structure of various electronic devices connected to the relay device, and it is possible to provide a POS system that can suppress an expansion of the occupied space.

Note 4: The relay device according to Note 1 to Note including a case that accommodates the main substrate and the communication substrate inside, wherein when the case is installed so that a second direction that intersects the first direction is along the vertical direction, the communication substrate is arranged inside the case so that it is located at the upper end section of the case. By this, by arranging the communication substrate on the upper portion of the relay device, the relay device can provide good wireless communication.

Note 5: The relay device according to Note 1 to Note 4, wherein a flat surface of the communication substrate is arranged to intersect with the first direction. By this, the relay device can reduce the length dimension of the relay device in the first direction.

Note 6: The relay device according to any one of Note 1 to Note 5, wherein the main substrate and the communication substrate are arranged to overlap in the first direction. By this, the relay device can reduce the length dimension of the relay device in the direction that intersects the first direction.

Note 7: The relay device according to any one of Note 1 to Note 6, further including a display substrate on which a display section is provided, wherein the display substrate is arranged, along the first direction, at an opposite side from the main substrate, with the communication substrate interposed therebetween, the display substrate and the communication substrate are arranged to overlap in the first direction, and a flat surface of the display substrate is arranged to intersect with the first direction. By this, the relay device can reduce the length dimension of the relay device in the direction that intersects the first direction.

Note 8: The relay device according to Note 7, further including a support member that supports the communication substrate, wherein the support member supports at least a part of the display substrate. By this, the relay device can suppress an increase in the number of components. By this, the relay device can suppress an increase in cost related to manufacturing.

Note 9: The relay device according to any one of Note 1 to Note 8, further including a sub-substrate on which at least one of the connectors is provided, wherein a flat surface of the sub-substrate is arranged to face the main substrate and the sub-substrate and the main substrate are arranged to overlap in a third direction that intersects the flat surface of the main substrate. By this, the relay device can reduce the length dimension of the relay device in the first direction.

Note 10: The POS system includes the relay device according to any one of Note 1 to Note 9, POS terminal, and POS peripheral devices. By this, the POS system has the same effect as the relay device described above.

Note 11: A relay device includes a case, a cover that is attached to an opening section provided in the case so as to be openable and closable, and that, in a closed state, covers at least a part of a front surface of the case and closes at least a part of the opening section, and a holding member that covers at least a part of the opening section from an inner side of the case and that holds the cover at a position in the closed state. By this, in the relay device, the holding member can hold the caver, and the cover can shield the opening section. Therefore, the relay device can suppress foreign matters from entering into the case through the opening section, and, while reducing the number of components, can efficiently arrange various members in the space inside the case.

Note 12: The relay device according to Note 11, wherein the cover is provided on one side surface of the case, the case is provided with an attachment section to which the cover is attached, and the cover pivots around the attachment section as a pivot shaft in a direction that intersects the one side surface of the case to open and close. By this, the relay device can suppress an increase of the installation space in the vertical direction or the left-right direction, rather than having a cover member that can be opened and closed by being slid it in a direction parallel to one side surface of the case.

Note 13: The relay device according to Note 12, wherein when one end section of the cover is pressed, the other end section of the cover pivots in a direction away from the device main body and the cover enters an opened state. By this, the relay device can perform easily the opening and closing operation with a simple structure.

Note 14: The relay device according to Note 13, wherein a pivoting stop section that is provided inside the case and that, when the cover is in the opened state, stops pivoting of the cover by contact by one end section of the cover that enters inside the case through the opening section. By this, the relay device can keep the region where the cover can pivot within a predetermined range.

Note 15: The relay device according to any one of Note 2 to Note 14, when the case is installed, a longitudinal direction of the attachment section extends in the horizontal direction. By this, the relay device, when the cover is in the closed state, can suppress the pivoting of the cover in a predetermined direction due to gravity.

Note 16: The relay device according to any one of Note 11 to Note 15, wherein the case is installed so that a long side of one side surface formed in a rectangular shape extends along the vertical direction. By this, when the relay device is installed on the installation surface, in plan view, the relay device can suppress an expansion of the space required for installation.

Note 17: The relay device according to any one of Note 11 to Note 16, wherein the cover covers an operation section provided on the front surface of the case. By this, the relay device can suppress an erroneous operation for the operation section.

Note 18: A POS system includes the relay device according to any one of Note 11 to

Note 17, POS terminal, and POS peripheral devices. By this, the POS system has the same effect as the relay device described above.

Note 19: A relay device includes a case, a main substrate accommodated in the case, a power supply adapter into which a power supply cord is configured to be inserted and removed, and a power supply adapter cable that connects the power supply adapter and the main substrate, wherein the main substrate is provided with a equipment connector where an external electronic device is connected and the power supply adapter and the power supply adapter cable are accommodated inside the case. By this, even when a plurality of so-called POS terminals or POS peripheral devices are connected to the relay device, a more organized system can be formed.

Note 20: The relay device according to Note 19, wherein the power supply adapter and the main substrate are arranged side by side. By this, the relay device can suppress an increase in the height dimension of the relay device.

Note 21: The relay device according to Note 19, wherein the power supply adapter and the main substrate are arranged to overlap vertically. By this, the relay device can suppress an increase in the dimension in the horizontal direction.

Note 22: The relay device according to any one of Note 19 to Note 21, further including a positioning section that portions the power supply adapter in a predetermined position, a fixed section that fixes the power supply adapter to the positioning section. By this, even if the power supply adapter is a various types of general-purpose products, the relay device can fix the power supply adapter so as to be easily attached and removed.

Note 23: The relay device according to any one of Note 19 to Note 22, wherein the case accommodates a plurality of other substrates that are separated from the main substrate, and the plurality of other substrates are arrange to overlap in the vertical direction. By this, the relay device can reduce the size of the case.

Note 24: The relay device according to any one of Note 19 to Note 23, wherein the case is formed by a case main body and a lid body, a cutout section with a recessed shape is formed in a bottom plate of the case main body, and cables that were connected to the equipment connectors are pulled out to outside of the case through the cutout section. By this, in the relay device, through the cutout section, the cables that were connected to the equipment connectors and the cable that was connected to the power supply adapter are pulled out downward. Therefore, the cables can be easily organized and routed.

Note 25: The relay device according to any one of Note 19 to Note 24, further including a cord holding section that holds the power supply adapter cable is provided inside the case. By this, the relay device, inside the case, can further reduce the space required for accommodating the power supply adapter cable, and can accommodate the power supply adapter cable in a state capable of reducing noise for other electrical components.

Note 26: A POS system includes the relay device according to any one of Note 19 to Note 25, POS terminal, and POS peripheral devices. By this, the POS system has the same effect as the relay device described above.

## Claims

1. A relay device comprising:
a plurality of types of connectors to which external electronic devices are connected;
a control section that controls communication between the electronic devices;
a power supply section that supplies power input from outside to the control section and to an electronic device that is connected to a connector via at least one of the connectors;
a main substrate on which the control section and at least one of the connectors are provided; and
a communication substrate that is connected to the main substrate and that has a communication section that performs wireless communication, wherein
the connector is arranged at one end section of the main substrate and
the communication substrate is arranged at an other end section side, which is a side opposite from the one end section in a first direction over a flat surface of the main substrate.

2. The relay device according to claim 1, wherein
when a printing device as the electronic device is connected to any of the connectors, the control section transmits a signal for controlling the printing device to the printing device.

3. The relay device according to claim 2, wherein
when the printing device is connected to any of the connectors, the control section causes the power supply section to supply power that enables drive of the printing device to the printing device via the connector.

4. The relay device according to any one of claims 1 to 3, further comprising:
a case that accommodates the main substrate and the communication substrate inside, wherein
when the case is installed so that a second direction that intersects the first direction is along the vertical direction, the communication substrate is arranged inside the case so that it is located at the upper end section of the case.

5. The relay device according to any one of claims 1 to 4, wherein
a flat surface of the communication substrate is arranged to intersect with the first direction.

6. The relay device according to any one of claims 1 to 5, wherein
the main substrate and the communication substrate are arranged to overlap in the first direction.

7. The relay device according to any one of claims 1 to 6, further comprising:
a display substrate on which a display section is provided, wherein
the display substrate is arranged, along the first direction, at an opposite side from the main substrate, with the communication substrate interposed therebetween,
the display substrate and the communication substrate are arranged to overlap in the first direction, and
a flat surface of the display substrate is arranged to intersect with the first direction.

8. The relay device according to claim 7, further comprising:
a support member that supports the communication substrate, wherein
the support member supports at least a part of the display substrate.

9. The relay device according to any one of claims 1 to 8, further comprising:
a sub-substrate on which at least one of the connectors is provided, wherein
a flat surface of the sub-substrate is arranged to face the main substrate and
the sub-substrate and the main substrate are arranged to overlap in a third direction that intersects the flat surface of the main substrate.

10. The relay device according to any one of claims 1 to 9, further comprising:
a case that accommodates the main substrate and the communication substrate inside,
a cover that is attached to an opening section provided in the case so as to be openable and closable, and that, in a closed state, covers at least a part of a front surface of the case and closes at least a part of the opening section, and
a holding member that covers at least a part of the opening section from an inner side of the case and that holds the cover at a position in the closed state.

11. The relay device according to claim 10, wherein
the cover is provided on one side surface of the case,
the case is provided with an attachment section to which the cover is attached, and
the cover pivots around the attachment section as a pivot shaft in a direction that intersects the one side surface of the case to open and close.

12. The relay device according to claim 10 or claim 11, wherein
when one end section of the cover is pressed, the other end section of the cover pivots in a direction away from the device main body and the cover enters an opened state.

13. The relay device according to any one of claims 10 to 12, further comprising:
a pivoting stop section that is provided inside the case and that, when the cover is in the opened state, stops pivoting of the cover by contact by one end section of the cover that enters inside the case through the opening section.

14. The relay device according to claim 11, wherein
when the case is installed, a longitudinal direction of the attachment section extends in the horizontal direction.

15. The relay device according to any one of claims 10 to 14, wherein
the case is installed so that a long side of one side surface formed in a rectangular shape extends along the vertical direction.

16. The relay device according to any one of claims 10 to 15, wherein
the cover covers an operation section provided on the front surface of the case.

17. The relay device according to any one of claims 1 to 9, further comprising:
a case that accommodates the main substrate inside,
a power supply adapter into which a power supply cord is configured to be inserted and removed, and
a power supply adapter cable that connects the power supply adapter and the main substrate, wherein
the power supply adapter and the power supply adapter cable are accommodated inside the case.

18. The relay device according to claim 17, wherein
the power supply adapter and the main substrate are arranged side by side.

19. The relay device according to claim 17, wherein
the power supply adapter and the main substrate are arranged to overlap vertically.

20. A POS system, comprising:
the relay device according to any one of claims 1 to 19,
a POS terminal, and
a POS peripheral device.
